# EUROPÄISCHE PATENTSCHRIFT

(11) **EP 0 972 388 B1**
(45) Veröffentlichungstag und Bekanntmachung des Hinweises auf die Patenterteilung: **19.12.2001**
(21) Anmeldenummer: 98919171.3
(22) Anmeldetag: 27.03.1998
(51) Int. Cl.: H04L 29/06

(54) **VERFAHREN ZUR PROGRAMMIERUNG EINES SICHERHEITSGERICHTETEN STEUERUNGSSYSTEMS**
METHOD FOR PROGRAMMING A SAFETY CONTROL SYSTEM
PROCEDE DE PROGRAMMATION D'UN SYSTEME DE COMMANDE DE SECURITE

(30) Priorität: 27.03.1997 DE 19712992; 14.10.1997 DE 19745161
(43) Veröffentlichungstag der Anmeldung: 19.01.2000
(73) Patentinhaber: Elan Schaltelemente GmbH & Co. KG, 35435 Wettenberg (DE)
(72) Erfinder: KRAMER, Manfred, D-35396 Gie en (DE); ZIEGLER, Olaf, D-56379 Geilnau (DE)
(74) Vertreter: Stoffregen, Hans-Herbert, Dr. Dipl.-Phys.
(86) Internationale Anmeldenummer: EP9801814
(87) Internationale Veröffentlichungsnummer: WO9844399

(56) Entgegenhaltungen:
- US-A- 5 444 643
- PEHRS J U ET AL: "CAN - DAS SICHERE BUSKONZEPT" ELEKTRONIK, Bd. 40, Nr. 17, 20. August 1991, Seiten 96-101, XP000260942

## Beschreibung

Die Erfindung bezieht sich auf ein Verfahren zur Programmierung eines sicherbeitsgerichteten Steuerungssystems mit zentralen und/oder dezentralen Stationen, wobei steuerungstechnische Regeln in Form von Software-Makros in einer zentralen oder dezentralen Station des Steuerungssystems abgelegt sind und wobei über ein Programmiergerät Befehle an die zentrale oder dezentrale Station übertragen werden, über die in den Software-Makros zusammengestellte Befehlsfolgen abgerufen werden.

Ein derartiges Verfahren wird in der US-Patentschrift 5,444,643 beschrieben. Das in der US-Patentschrift 5,444,643 beschriebene Verfahren bezieht sich auf die Programmierung eines kompatiblen elektronischen Motorsteuergerätes, das zumindest einen Mikrocomputer aufweist, um Steuerfunktionen auszuüben. Der Mikrocomputer weist ein ROM auf, in dem Anwender-Software abgelegt ist. Auch ist der Mikrocomputer mit einem Prüfprotokoll-Chip versehen, wobei der ROM-Baustein derart programmiert ist, dass die Anwender-Software über den Prüfprotokoll-Chip mit dem Bus kommunizieren kann und ein erstes Interface bildet. Ferner ist ein zweites Interface vorgesehen, das unabhängig von dem Prüfprotokoll-Chip ist. Erstes und zweites Interface sind über ein von der Anwender-Software unabhängiges Treibermodul verbunden, das die Eigenschaften eines Adapters hat. Die Anwendungs-Software und das Treibermodul werden über einen Linkprozess miteinander verbunden, wobei ein Programmcode als Ergebnis eines Linkprozesses gebildet wird.

Sicherheitsgerichtete Steuerungssysteme werden nach dem Stand der Technik derart programmiert, dass logische Verknüpfungen in einem externen Programmiergerät wie handelsüblichem Personalcomputer eingegeben und mit einem unter anderem sicherheitstechnische Funktionen ausführenden Ablaufprogramm zusammengeführt (compiliert) werden. Anschließend wird das Programm über eine Schnittstelle dem sicherheitsgerichteten Steuerungssystem übertragen.

Da ein handelsüblicher PC jedoch über keine besonderen sicherheitstechnischen Merkmale verfügt, muss die Programmierung, die über diesen PC erfolgt, im Rahmen eines Abnahmetests der Steuerung überprüft werden. Insbesondere muss jede sicherheitsgerichtete Funktion auf ihre ordnungsgemäße Funktion getestet werden.

Bei einer Progammierung mit handelsüblichem PC kann das Problem auftreten, dass durch das Programmiergerät verursachte Fehler oder durch die Übertragung des Programms zu dem Steuerungssystem verursachte Fehler die programmierten logischen Verknüpfungen beeinträchtigen, wodurch sicherheitsrelevante Steuerungsregeln verändert werden, was sich auf die Sicherheit des Steuerungssystems auswirken kann.

Wird der vorgenannte Abnahmetest entsprechend den Vorschriften durchgeführt, entstehen hohe Aufwendungen, da z. B. jedes Not-Aus-Befehlsgerät u. ä. Signalgeber funktionell getestet werden müssen, wobei zusätzliche Abhängigkeiten und Nicht-Abhängigkeiten zwischen den verschiedenen Schutzeinrichtungen zu berücksichtigen sind. Wird dieser Aufwand nicht oder nur unzulänglich betrieben, entstehen funktionelle Sicherheitsrisiken.

Der vorliegenden Erfindung liegt das Problem zu Grunde, ein Programmierverfahren für sicherheitsgerichtete Steuerungssysteme zur Verfügung zu stellen, durch das die Programmierung einerseits vereinfacht und andererseits eine höhere Sicherheit gewährleistet ist.

Das Problem wird dadurch gelöst, dass die Software-Makros sicherheitsgerichtete steuerungstechnische Regeln zur Verknüpfung von an Ein- und Ausgängen der zentralen oder dezentralen Station anliegender Ein- und Ausgangsinformationen enthalten, wobei die Programmierung in Form einer Zuweisung von Ein- und Ausgangsinformationen über Parameter erfolgt, die von dem Programmiergerät an die Software-Makros aufweisende Station übertragen werden.

Unter Software-Makros sind Befehlsfolgen zur Zuweisung von Ein- und Ausgangsinformationen zu verstehen. Das handelsübliche Programmiergerät dient in diesem Falle lediglich dazu, die Eingangs- und Ausgangsparameter des Software-Makros zu definieren/zu bestimmen, während die logische Verknüpfung der sicherheitstechnischen Bedingungen bereits im Software-Makro des sicherheitsgerichteten Steuerungssystems hinterlegt ist.

Auf diese Weise wird eine Entkopplung von sicherheitsgerichtetem Steuerungssystem und handelsüblichem PC erreicht. Die Betriebs-Software eines handelsüblichen PC's mit RS 232-Schnittstelle, die regelmäßig über keinerlei sicherheitsgerichtete Eigenschaften, wie Redundanz. Testverfahren usw, verfügt, dient also lediglich der Übertragung der gewünschten steuerungstechnischen Parameter an das jeweilige in der Station gespeicherte Makro, d. h. Gefahren durch Ausfälle oder Störungen im PC können somit nicht in die in den Software-Makros hinterlegten Befehlsfolgen zur Zuweisung von Ein- und Ausgangsinformationen gelangen.

Die Software-Makros werden in einer Bus-Masier-Station, vorzugsweise Bus-AnfangsStation hinterlegt. Die hinterlegten Makro-Befehle sind so beschaffen, dass Fehler ausgeschlossen werden können, indem diese relativ kleinen Programmteile einmalig einer 100%igen Prüfung im Sinne von Simulation und Testverfahren unterzogen werden.

Bei einer besonders bevorzugten Verfahrensweise ist vorgesehen, dass die Verifizierung des sicherheitsgerichteten Steuerungsprogramms durch ein Rücklesen der programmierten Parameter, vorzugsweise Ein-/Ausgangsparameter und ihrer Rückbeslätigung am Dateneingabegerät erfolgt.

In den Software-Makros ist die gewünschte funktionelle Wirkung bestimmter hardware- und/oder softwaremäßiger Eingangs- und/oder Ausgangskonfigurationen hinterlegt, z. B. die Funktion der Überwachung einer beweglichen Schutzeinrichtung an Maschinen mit gefahr-bringenden Bewegungen, d. h. eine gefahrbringende Bewegung (ein Ausgang für einen Antrieb) kann erst eingeleitet (eingeschaltet) werden, wenn zwei Überwachungskontakte. die die Stellung der Schulzeinrichtung detektieren, geschlossen sind. Öffnet einer der beiden Kontakte, wird der Ausgang der gefahrbringenden Bewegung abgeschaltet. Ist mindestens einer von beiden Kontakten nicht geschlossen, kann keine Freigabe einer gefahrbringenden Bewegung eingeleitet werden.

Über das handelsübliche Programmiergerät wird lediglich bestimmt, welche hardware- und/oder softwaremäßigen Eingänge und welche hardware- und/oder softwaremäßigen Ausgänge im Sinne einer Zuordnung, z. B. Klemmenzuordnung, in der gewünschten Funktion involviert und einander zugeordnet sein sollen.

In Bezug auf die Programmierung mit einem handelsüblichen PC verbleibt mithin lediglich das Risiko, dass die Übertragung der Ein-/Ausgangsparameter in Richtung Software-Makros fehlerbehaftet sein könnte. Anstelle eines Abnahmetests genügt es im vorliegenden Falle aber, dass die Ein-/Ausgabeparameter auf Richtigkeit nur im Rahmen eines Rücklesens überprüft und rückbestätigt werden müssen.

Zur Erzeugung der Parameter sind sogenannte Parametrier-Masken vorgesehen, über die eine steuerungstechnische Verknüpfung von Ein- und/oder Ausgangssignalen erfolgt.

Vorzugsweise erfolgt die Datenübertragung zwischen der oder den Stationen und dem Programmiergerät über eine RS-232-Schnittstelle.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden Ausführungsbeispiels.

Es zeigen:
- Fig. 1: prinzipieller Aufbau eines Sicherheitsbussystems,
- Fig. 2: prinzipieller Aufbau einer Master-Station mit zwei Kanälen,
- Fig. 3: Schaltungsanordnung eines ersten Kanals der Master-Station gemäß Fig. 2
- Fig. 4: prinzipieller Aufbau einer Ein- und/oder Ausgangs-Station,
- Fig. 5: prinzipieller Aufbau einer Bus-Abschluss-Station,
- Fig. 6 - 10: Darstellungen von Programmiermasken,
- Fig. 11: logischer Aufbau einer Abschalttabelle.

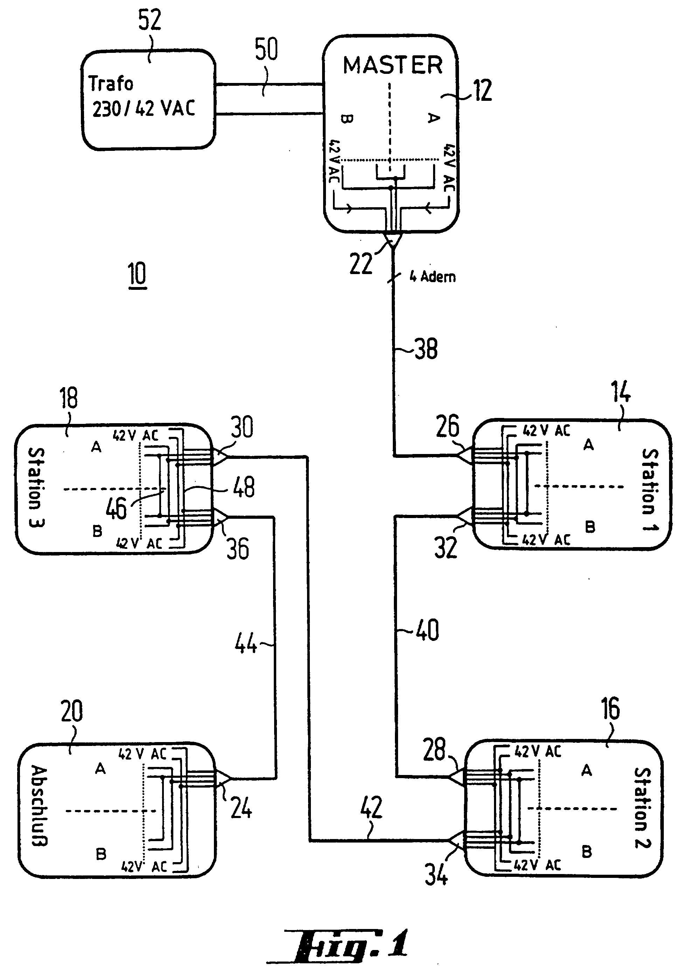

Fig. 1 zeigt ein sicherheitsgerichtetes Steuerungssystem 10, das in dem hier dargestellten Ausführungsbeispiel als strangförmiges Bussystem ausgebildet wird. Das Bussystem weist eine Vielzahl von miteinander in Verbindung stehender Ein- und/oder Ausgänge aufweisender zentraler und/oder dezentraler Stationen 12, 14,16 ,18, 20 auf. Dabei ist eine erste Station 12 als Bus-Anfangsstation bzw. als Bus-Master mit einem Busanschluss 22 und eine letzte Station 20 als Bus-Abschluss-Station mit einem Buseingang 24 ausgebildet. Die weiteren Stationen 14, 16, 18 besitzen jeweils einen Buseingang 26, 28, 30 und einen Busausgang 32, 34, 36. Zwischen einem Busausgang 22, 32, 34, 36 einer Bus-Station und einem Buseingang 26, 28, 30 ist jeweils eine einkanalige Busleitung 38, 40, 42, 44 angeordnet. Auf diese Weise kann das Bussystem 10 einen Strang mit bis zu 64 Stationen aufweisen.

Das Übertragungsmedium bzw. die einkanalige Busleitung 38, 40, 42, 44 besteht aus einer Datenleitung 46 und einer Energieversorgungsleitung 48. Dabei sind sowohl die Datenleitung als auch die Energieversorgungsleitung zweiadrig ausgebildet.

Zur Energieversorgung ist der Bus-Master 12 über eine Zuleitung 50 mit einem Transformator 52 verbunden, der seinerseits mit Netzspannung verbunden ist und eine berührungssichere Versorgungswechselspannung von vorzugsweise 42 V AC zur Verfügung stellt. Sowohl die Datenleitung 46 als auch die Energieversorgungsleitung 48 werden innerhalb der die Busein- und -ausgänge 26, 32; 28, 34; 30, 36 aufweisenden Stationen intern durchgeschliffen. Grundsätzlich weist jede Station 12, 14, 16, 18, 20 des Bussystems 10 zwei voneinander unabhängige Teilsysteme bzw. Knoten A, B auf, die im Folgenden als Kanal A und Kanal B bezeichnet werden. Durch die zweikanalige Ausbildung wird ein redundantes System aufgebaut. Dabei hat jeder Kanal A, B innerhalb der Station 12 - 20 die Möglichkeit, selbständig auf den Bus 38 - 44 zuzugreifen. Mit anderen Worten arbeitet jeder Kanal A, B nach dem Multi-Master-Prinzip selbständig. Grundsätzlich weisen die Stationen 12 - 20 einen im wesentlichen identischen Hardware-Aufbau auf.

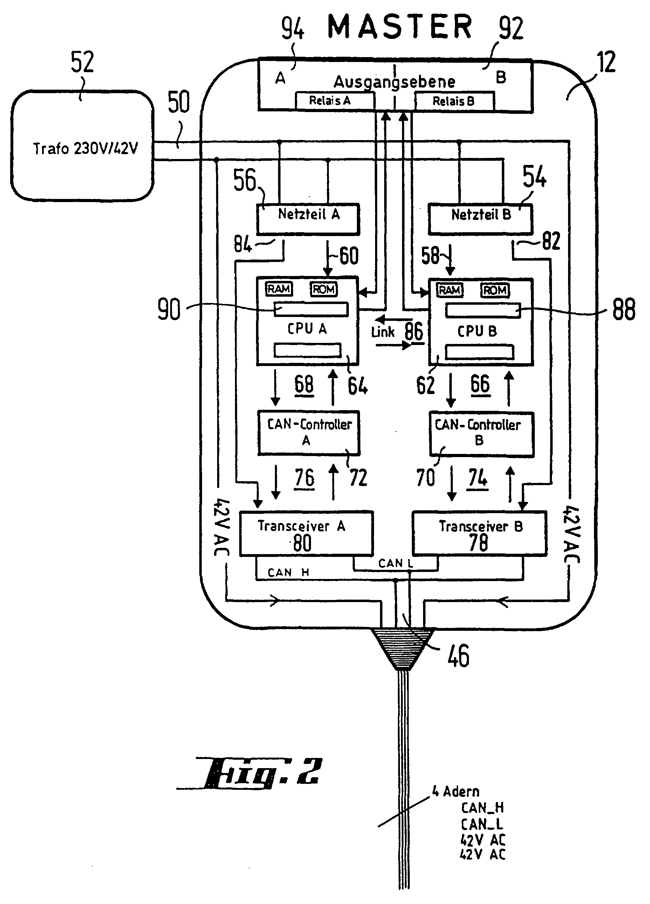

In Fig. 2 ist der Aufbau des Bus-Masters 12 dargestellt. Die Kanäle A und B weisen jeweils ein Netzteil 54, 56 auf, das eingangsseitig mit der Vorsorgungsleitung 50 verbunden ist. Ein erster Ausgang 58, 60 des Netzteils 54, 56 ist mit einer programmierbaren Steuereinheit 62, 64 wie Mikrocomputer verbunden. Die Mikrocomputer 62, 64 sind über Leitungen 66, 68 mit Bus-Controlern 70, 72 verbunden, die über weitere Leitungen 74, 76 mit Buskopplern 78, 80 mit der Bus-Datenleitung 46 verbunden sind. Die Buskoppler 78, 80 weisen eine separate Spannungsversorgung auf und sind mit einem zweiten Ausgang 82, 84 des Netzteils 54, 56 verbunden.

Über eine Verbindungsleitung bzw. einen Link 86 zwischen den Mikrocomputern 62, 64 erfolgt ein Datenaustausch zwischen den Kanälen A und B zur gegenseitigen Überprüfung. Dabei handelt es sich um eine galvanisch entkoppelte, serielle Schnittstelle. Des Weiteren sind in den Mikrocomputern 62, 64 serielle Schnittstellen 88, 90 wie RS 232- oder CAN-Schnittstelle vorgesehen, die über jeweils eine Verbindungsleitung mit einer Ausgangsebene 92 des Kanals B und mit einer Ausgangsebene 94 des Kanals A verbunden sind, um eine Verbindung zu einem externen Programmiergerät wie Personalcomputer zur Programmierung des Bussystems herzustellen. Auch können weitere Schnittstellen zur Ankopplung an andere Busebenen vorgesehen sein. Die Ausgangsebenen 92, 94 weisen jeweils bis zu acht Halbleiterausgänge auf.

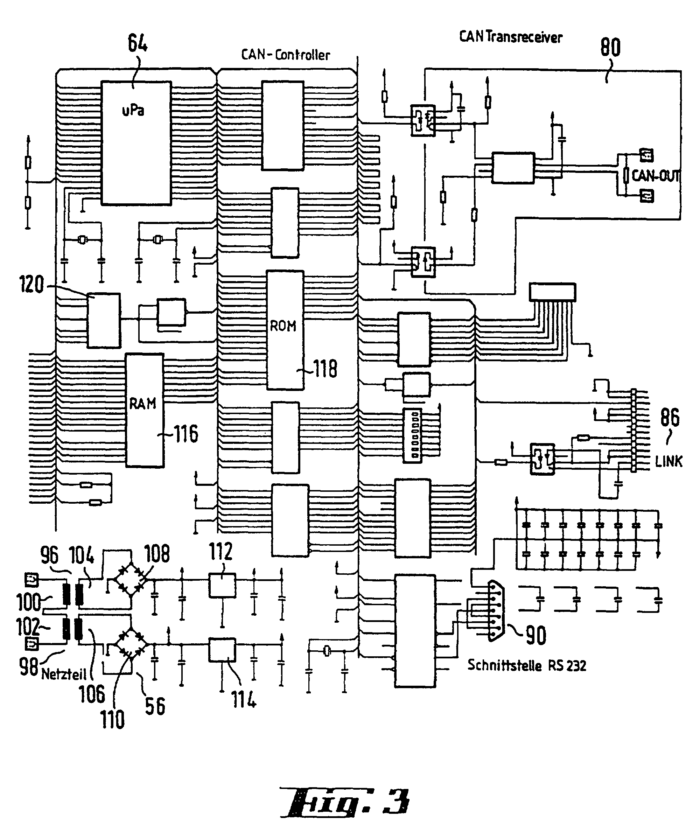

In Fig. 3 ist eine Schaltungsanordnung des Kanals A der Master-Station 12 gemäß Fig. 2 im Detail dargestellt. Dabei weist der Kanal A einen an sich nach dem Stand der Technik typischen Schaltungaufbau auf. Das Netzteil 56 umfasst zwei Transformatoren 96, 98, deren Primärwicklungen 100, 102 primärseitig in Reihe an Versorgungsspannung liegen. Die Transformatoren 96, 98 weisen jeweils eine Sekundärwicklung 104, 106 auf, die jeweils über einen Gleichrichter 108, 110 und über einen Spannungsregler 112, 114 eine geregelle Ausgangsspannung einerseits für den Mikrocomputer 64 und andererseits für den Buskoppler 80 zur Verfügung stellen. Der Mikrocomputer 64 weist zudem externe Speicherbausteine 116, 118 wie RAM und ROM auf sowie einen Watchdog 120. Die beiden Mikrocomputer 62, 64 der Master-Station 12 können unabhängig voneinander auf den Bus 38, 40, 42, 44 über jeweils den Buskoppler 78, 80 zugreifen. Über den Link 86 ist ein Datenaustausch für Kontrollzwecke möglich. Die Verbindung ist optoelektronisch entkoppelt.

Durch den zentralen Leistungstransformator 52 wird die Netzspannung von U_{N} = 230 V AC auf eine Versorgungsspannung Uᵥ = 42 V AC transformiert. Die Versorgungsspannung Uᵥ liegt am Eingang des Netzteils 54, 56 an und ist mit den Eingangswicklungen der Transformatoren 96, 98 verbunden. An den Ausgangswicklungen 104, 106 liegt eine Spannung von ca. 8 V AC an, die über den Gleichrichter 108, 110 und zugeordnete Spannungsregeler 112, 114 auf ca. 5 V begrenzt wird. Die Spannung wird mit Hilfe des Watchdog 120 überwacht.

Der ROM-Baustein 118 dient zur Speicherung von Firmware. Der ROM-Baustein 118 ist als EPROM ausgebildet und wird mit Hilfe einer Checksummenbildung 16 Bit (CRC-Check) zyklisch überprüft. Anwenderspezifische Daten werden in einem Flash-EPROM gespeichert. Die Programmierung des Flash-EPROMS erfolgt über die serielle Schnittstelle 90. Mit Hilfe eines Schalters und verschiedener Sicherungsmechanismen können die Anwenderdaten übernommen werden. Die Prüfung des Flash-EPROMS erfolgt mit Hilfe des oben beschriebenen CRC-Check.

Das externe RAM 116 ist zusätzlich zu einem prozessorinternen RAM vorgesehen. Dieser RAM-Baustein 116 beinhaltet eine RTC (Real Time Clock). Für den Mikrocomputer 62 ist ebenfalls ein externes RAM vorgesehen, das allerdings keine RTC aufweist.

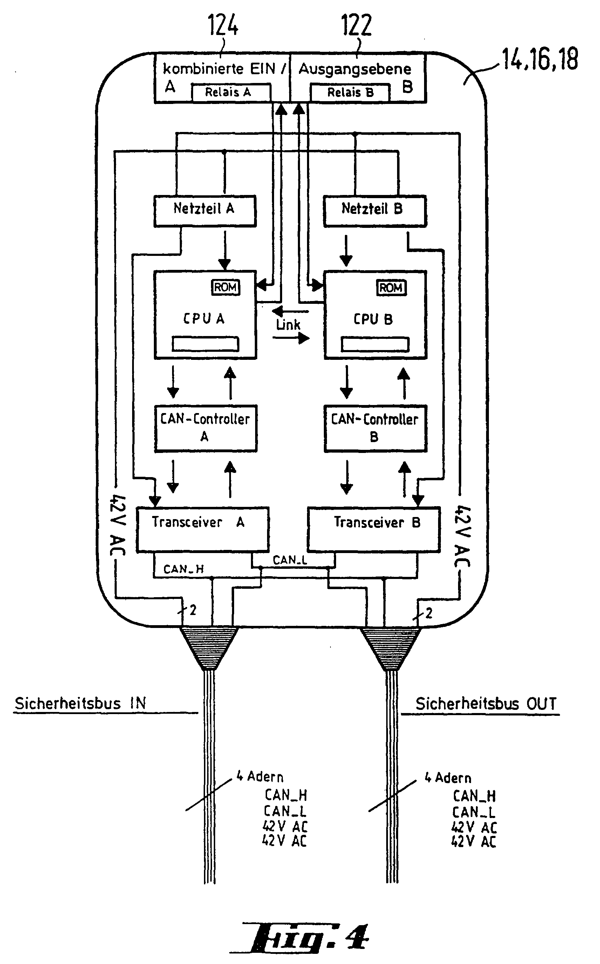

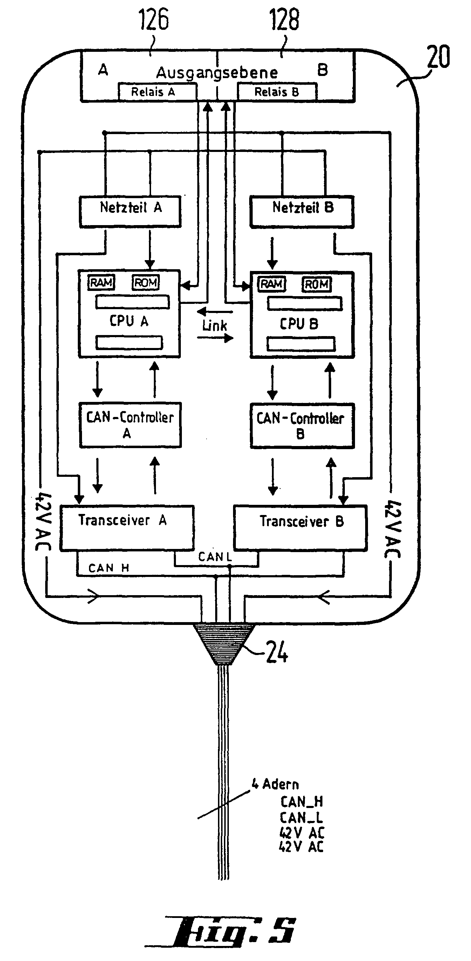

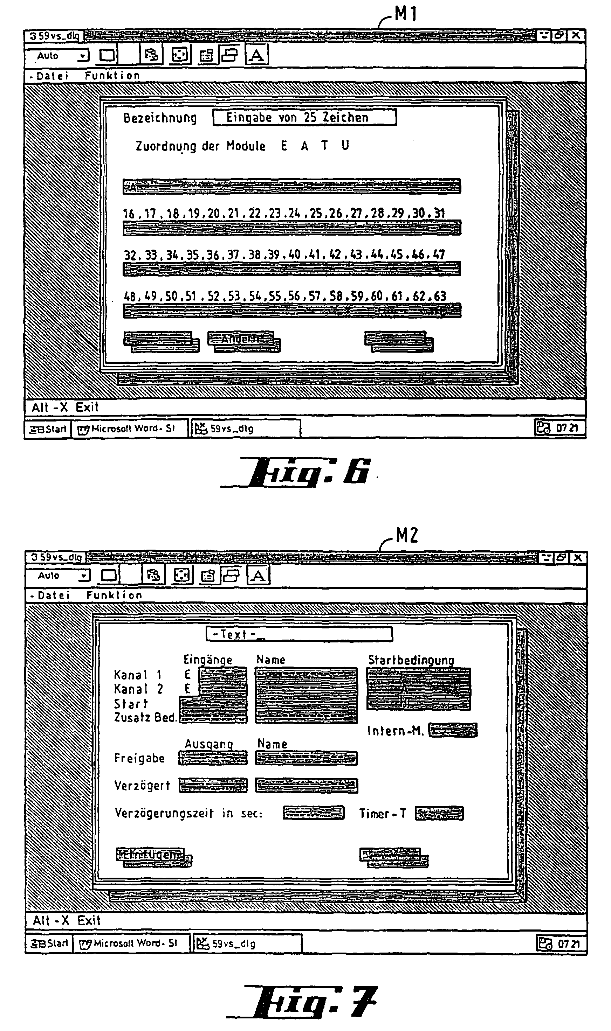

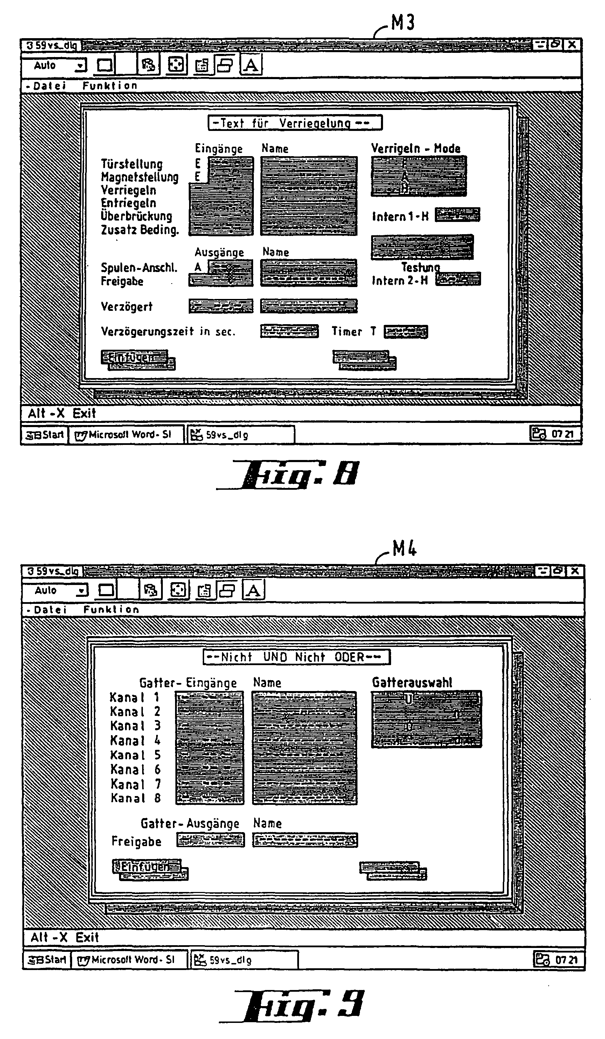

Fig. 4 zeigt beispielhaft den Aufbau einer der Stationen 14, 16, 18. Die Stationen 14, 16, 18 weisen im wesentlichen den gleichen internen Aufbau auf wie die Master-Station 12. Ein wesentlicher Unterschied besteht in der Ausbildung einer Ein- und/oder Ausgangsebene 124, 122. So kann die Bus-Station als Bus-Ausgangsstation mit bis zu acht Halbleiterausgängen oder als Bus-Eingangsstation mit Halbleiterausgängen ausgebildet sein, an der ein bis vier Not-Aus-Taster oder wahlweise ein bis acht Befehlsgeräte wie Verriegelungs oder Entriegelungsgeräte angeschlossen sind. Die Kontaktelemente werden dabei an eine Klemme gelegt und intern - über Optokoppler getrennt - mit den Eingängen der beiden Mikrocomputersysteme verbunden. Zur Überprüfung der Leitungen auf Querschluss werden zur Testung die Leitungen periodisch mit Signalen beaufschlagt.

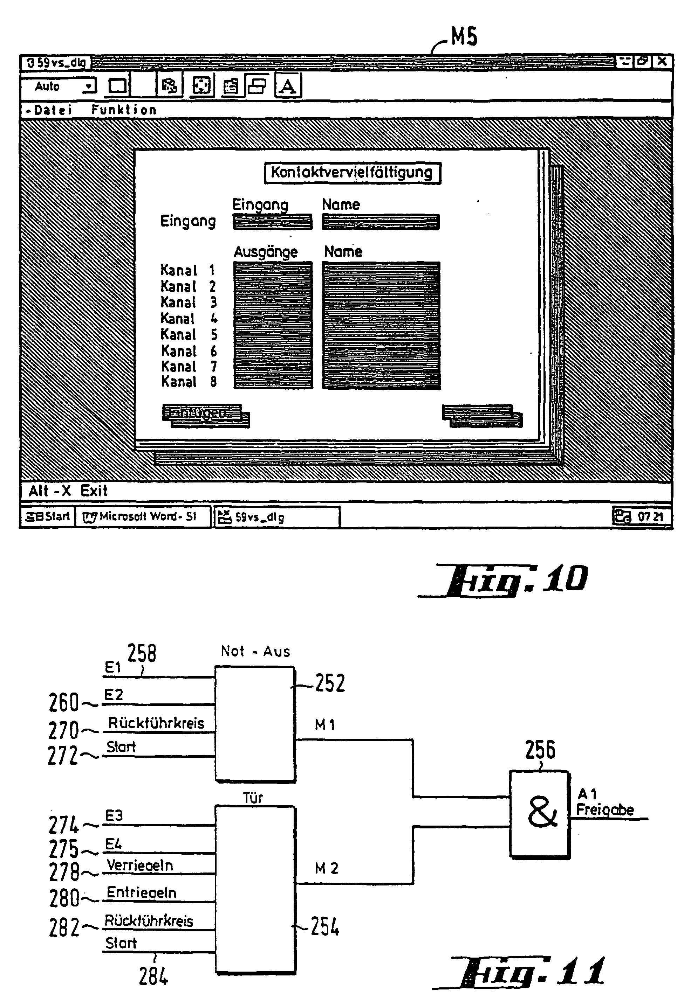

In Fig. 5 ist ein Aufbau der Bus-Abschluss-Station 20 dargestellt. Im Unterschied zu den Bus-Stationen 14, 16, 18 weist die Bus-Abschluss-Station nur den Buseingang 24 und keinen weiteren Busausgang auf. Die Bus-Abschluss-Station 20 kann ebenfalls über Ein- und/oder Ausgänge 126, 128 verfügen, die jeweils einem Kanal A oder B zugeordnet sind. Die technische Funktion der Bus-Abschluss-Station 20 soll später erläutert werden.

Insbesondere ist darauf hinzuweisen, dass die Hardware dahingehend konzipiert ist, möglichst Fehler zu vermeiden. Aus diesem Grunde wurden in die Stationen 12 - 20 jeweils zwei unabhängige Kanäle bzw. Funktionseinheiten A und B zur Ausführung von spezifizierten Funktionen integriert. Die Kanäle A und B sind gleich d. h. homogen redundant. Die von beiden Kanälen verwendeten bzw. erzeugten Signale werden zum Zwecke der Fehlererkennung ständig miteiander verglichen (Vergleich von relevanten Ein- und/oder Ausgangssignalen). In diesem Zusammenhang ist insbesondere auf die übergeordnete Relaisebene (Fail-Safe-Vergleiche), den internen gegenseitigen Vergleich über den Link 86 sowie auf einen externen Vergleich der Eingabedaten durch den Anwender hinzuweisen.

Der RAM-Baustein 116 wird mit Hilfe eines Software-Tests geprüft, wohingegen sich die Testung des ROM-Bausteins 118 auf die Signaturbildung beider Bausteine und deren Vergleich beschränkt.

Durch die Verwendung teildiversitärer Mikrocomputer (Mikrocomputer, die den gleichen Befehlssatz aufweisen, aber intern unterschiedliche Hardware-Strukturen haben), können zum Teil systematische Hardwarefehler aufgedeckt werden. Ungeachtet dessen führen die Mikrocomputer beider Kanäle einer Station ständig Selbsttestfunktionen im Hintergrund aus.

Erfindungsgemäß unterliegt die Kommunikation zwischen der Bus-Anfangsstation bzw. dem Bus-Master 12 und der Bus-Abschluss-Station 20 zeitbedingten Informationen. Ein Ausbleiben einer Nachricht innerhalb eines definierten Zeitfensters, z. B. 15 ms, führt zur Gesamtabschaltung des Systems. Alternativ besteht auch die Möglichkeit, zeitbedingte Informationen nicht nur zwischen dem Master und der Bus-Abschluss-Station 20 sondern zwischen einer Vielzahl von intelligenten Busteilnehmem 14, 16, 18 auszutauschen. Dieser zeitkritische Informationsaustausch beschränkt sich nicht nur auf Bus-Master 12 und Bus-Abschluss-Station 20.

Durch diese Maßnahme wird gewährleistet, dass eine Unterbrechung einer Bus-Leitung 38 - 44 innerhalb von ca. 15 ms detektiert werden kann. Der Nachrichteninhalt unterliegt einem zeitlichen Wechsel (Hochzählverfahren). Mit dieser Maßnahme wird verhindert, dass ein anderer Teilnehmer innerhalb des Bussystems die Nachricht des Masters oder Bus-Abschlusses simulieren kann.

Eine Unterbrechung innerhalb einer Station kann sich gemäß den üblichen Fehlerbetrachtungsweisen und entsprechend dem Leiterplatten-Layout nur auf einen Kanal auswirken. Somit wird für diese Fehlerart die Zweitfehlereintrittszeit zu Grunde gelegt. Aus dieser Überlegung ergibt sich die Notwendigkeit, dass sich alle Kanäle in jeder Station (ausgenommen Master 12 und Bus-Abschluss-Station 20) je nach sicherheitstechnischen Anforderungen zum Beispiel innerhalb einer Stunde melden müssten. Auf diese Weise kann die Bus-Auslastung auf ein Maß reduziert werden, das den Anforderungen hinsichtlich der Verfügbarkeit genügt.

Im Folgenden soll die dem Bus-Systems 10 zu Grunde liegende Anwender-Software erläutert werden. Einem Anwender wird die Möglichkeit gegeben, das Steuerungssystem seinen Gegebenheiten anzupassen. Mit Hilfe einer menügesteuerten Software kann der Anwender den Stationen 12 - 20 Ein- und/oder Ausgänge zuordnen. Diese Konfigurationssoftware kann auf jedem IBM-kompatiblen System installiert werden, welches zum Beispiel über das Betriebssystem MS-DOS verfügt. Die Zuordnung von Ein- und Ausgangsebenen erfolgt in einer matrix-ähnlichen Form.

Erfindungsgemäß werden dem Anwender Funktionsblöcke angezeigt, ohne dass dieser selbst Zugriff auf die logischen Funktionen dieser Blöcke hat. Funktionsblöcke umfassen zum Beispiel Parametrierung handelsüblicher Schutzeinrichtungen, z. B. Türzuhaltungen, Not-Aus-Befehlseinrichtungen und ähnliches, aber auch - für spezielle Schutzfunktionen - die Programmierung logischer Funktionen wie UND, ODER, NICHT. Die logischen Funktionen sind nicht im Programmiergerät wie PC abgelegt, sondern im Programmiergerät werden lediglich der Name des Funktionsblockes z. B. Türzuhaltung, dessen Nummer, Optionen, Eingangsklemmennummern, Ausgangsklemmennummem und Kommentare abgelegt. Die eigentlichen logischen Bestandteile, die in einem Relaisbaustein durch die interne Verdrahtung realisiert sind, liegen als Makro in dem Speicherbaustein 118 wie EPROM ab. Der Speicherbaustein ist z. B. Bestandteil des Bus-Masters 12.

Der Anwender kann aus dem Programmiergerät über die serielle Schnittstelle 90 Daten an z. B. den Bus-Master 12 übertragen. Um dem Anwender die Möglichkeit zu eröffnen, eigene nicht sicherheitsrelevante Aktoren/Sensoren in das System einzubringen, sind zusätzliche Makros mit einfachen logischen Funktionen wie "UND", "ODER" und "NICHT" vorgesehen, die nur auf einen fest vorgegebenen Ausgangsbereich wirken dürfen. Mit diesen Funktionen kann der Anwender einen Eingangsbereich nutzen, diesem logische Funktionen zuordnen und auf vorgegebene Ausgänge wirken lassen. Da die logischen Funktionen dieser Makros nur im Bus-Master 12 abgelegt sind und der Eingangsvariablensatz auf einen Adressbereich beschränkt wurde und nur vordefinierte Ausgänge benutzt werden dürfen, kann der Anwender keinen Einfluss auf den sicherheitstechnischen Programmteil des Datensatzes nehmen. Die beschriebenen Möglichkeiten bleiben dem Einrichter durch einen Passwortschutz vorbehalten.

In den Fig. 6 - 10 sind beispielhaft Programmiermasken dargestellt, über die das System programmierbar ist. Mit Hilfe einer Maske M1 wird festgelegt, an welcher Stelle sich die jeweiligen Stationen 12 - 20 im Bus-System 10 befinden sollen. Im dargestellten Ausführungsbeispiel liegt eine maximale Ausbaumöglichkeit bei 64 Bus-Stationen. Dabei ist vorgesehen, dass der Bus-Master 12 und die Bus-Abschluss-Station 20 bereits fest vorgegeben sind.

Fig. 7 zeigt eine Maske M2 für ein Not-Aus-Modul. Die Maske M2 weist ein Feld "Bezeichnung" auf, in das ein frei wählbarer Name eingetragen werden kann. Ferner ist ein Feld "Kanal 1" /"Kanal 2" vorgesehen, in das eine Klemmenbezeichnung des aufgelegten Kontaktes eingetragen wird. Des Weiteren ist ein Feld "Start" vorgesehen, das die Klemme eines Start-Tasters beschreibt. Das Feld "Zusatzbed." kann z. B. einen Rückführkreis darstellen. In einem Feld "Freigabe" wird der gewünschte Ausgang bei Erfüllung aller Bedingungen gesetzt. Es wird eine weitere abfallverzögerte Freigabe in einem Feld "verzögert" zur Verfügung gestellt. Die Verzögerungszeit ist dabei einstellbar. Die Startbedingung kann über eine abfallende Flanke automatisch oder mit ansteigender Flanke erfolgen. Im Rahmen anderer Anwendungen könnte je nach sicherheitstechnischen Rahmenbedingungen auch ein automatischer Start vorgegeben sein.

In Fig. 8 ist eine Maske M3 für ein Verriegelungseinrichtungsmodul dargestellt, die im wesentlichen den Aufbau wie die Maske M2 gemäß Fig. 7 aufweist.

In Fig. 9 ist eine Maske M4 dargestellt, die ein Logik-Modul darstellt. Mit Hilfe dieser Maske M4 können Eingänge oder Merker verknüpft werden. Dazu stehen die logischen Verknüpfungen "UND, ODER, NOR oder NAND" zur Verfügung. Durch Kombination verschiedener logischer Ausdrücke können alle logischen Funktionen programmiert werden.

Fig. 10 zeigt eine Maske M5 eines Kontaktvervielfältigungs-Moduls. In einem Feld "Eingang" kann z. B. ein Ausgang eines Not-Aus-Moduls eingesetzt werden, so dass ein Eingang auf mehrere Ausgänge wirken kann. Des Weiteren sind Felder "Kanal 1 bis 8" vorgesehen, in die nur freie Ausgänge eingesetzt werden können, die sich äquivalent dem "Master-Eingang" verhalten.

Insgesamt wird eine benutzerfreundliche Oberfläche zur Anwenderprogrammierung geschaffen. Die Software wird mit Hilfe automatischer Kontrollprogramme auf die Einhaltung selbst erstellter Richtlinien überprüft. Da erfindungsgemäß Software-Module als Makros im Bus-Master 12 abgelegt sind, sind diese einfach zu prüfen und gegebenenfalls für Erweiterungszwecke leicht zu ändern, da anstelle eines miteinander und/-oder untereinander verknüpften Gesamt-Ablaufprogramms in sich abgeschlossene, vergleichsweise kleine und überschaubar verifizierbare Blöcke (Makros) das Gesamtprogramm bilden. Durch die Verwendung eines Software-Moduls für jeweils eine Aufgabe wie Türzuhaltung, federkraftverriegelt, magnetkraftverriegelt oder Not-Aus können diese Funktionen auf der untersten Mikrocomputer- bzw. Prozessorebene programmiert werden, was die Transparenz und Fehlerfreiheit dieser Programmteile erhöht.

Nachdem ein Anwender am Programmiergerät wie PC gewünschte Verknüpfungen programmiert hat, wird das Anwenderprogramm über die serielle Schnittstelle 88 an den Kanal A des Bus-Masters 12 übertragen. Dabei werden folgende Daten übertragen:
- Modulart (Not-Aus, Türverriegelung ...),
- Adress-Eingänge,
- Adress-Ausgänge und
- Verzögerungszeiten.

Kanal A des Bus-Masters 12 sendet die Datenteile invertiert über den Link 86 zum Kanal B, dieser invertiert die Daten vollständig zurück und sendet diese direkt über die serielle Schnittstelle 88 des Kanals A an das Programmiergerät zurück. Im Programmiergerät liegt nun das nicht invertierte zurückgelesene Anwenderprogramm und das invertierte gesendete Anwenderprogramm. Diese Daten werden im Programmiergerät verglichen.

Die Kanäle des Bus-Masters vergleichen über den Link 86 die empfangenen Daten des Anwenderprogramms. In dem jeweiligen Kanal werden diese Daten den entsprechenden Makros zugeordnet und in das Flash-Eprom 218 kopiert. Nachdem alle Daten übertragen wurden, muss der Anwender durch Zurückladen der angegebenen Parameter diese mit den aktuellen Parametern vergleichen. Durch Bestätigung dieser Handlung kann der Anwender sein Programm als Testlauf/Inbetriebnahme starten. Zusätzlich bilden Programmiergerät und die jeweiligen Kanäle A und B eine CRC über die empfangenen/gesendeten Daten. Das Programmiergerät sendet als Abschluss seine CRC, die vom Kanal A und B verglichen werden.

Im Folgenden sollen implementierte Überwachungsfunktinen erläutert werden. Es sind implementierte Sicherungsverfahren bzw. Überwachungsfunktionen auf Bus-Ebene, auf Protokoll-Ebene sowie auf Prozessor-Ebene vorgesehen.

Implementierte Sicherungsverfahren auf Bus-Ebene wurden vorgesehen, indem von acht möglichen Daten-Bytes drei genutzt werden und in diesen ein aktueller Zählerstand, ein aktueller invertierter Zählerstand und ein Sicherungsbyte übertragen wird. Jeder Kanal im Master besitzt die Information über die Zählerstände jedes Moduls. Jede Station besitzt einen eigenen Zähler, dessen Spiegel im Master abgelegt ist. Die Zähler einer Station (Kanal A, Kanal B) sind unabhängig.

Folglich liegt die Information des Zählerstandes jeder Station viermal im Bus-Master vor (Kanal A Stationsebenen A, B; Kanal B Stationsebenen A, B). Das Sicherungsbyte enthält die Informationen über den Zustand der Ein-/Ausgänge und ist jeweils in den Kanälen des Masters mit den jeweiligen Zählerständen abgelegt. Die Zählerstände ändern sich mit jedem Senden einer Nachricht/Statusmeldung. Das Sicherungsbyte kann - wenn keine Änderung der Aus-/Einsangszustände eintritt - konstant bleiben. Ändert sich der Zählerstand nicht, so wird ein interner Fehler angenommen und das Bus-System stillgesetzt. Das Senden der Statusmeldungen innerhalb der angegebenen Zeitfenster wird gemäß folgender Tabelle I überwacht:

**TABELLE I:**

| Status gesendet von | Überwacht durch | Zeitfenster/ms |
|---|---|---|
| Master | Busabschluss | 15 ms |
| | alle Stationen | 15 ms |
| Busabschluss | Master | 15 ms |
| | alle Stationen | 15 ms |
| Stationen | Master | 100 ms |

Die Zeitfenster ergeben sich aus folgenden Fehlerfall-Überlegungen:

### 1. Annahme, dass eine der Busleitungen 38, 40, 42, 44 durchtrennt ist

Da die Busleitung nur einkanalig ist, würde ein Durchtrennen dieser Leitung aus der Sicht des Bus-Masters 12 zunächst nicht bemerkt werden. Da die Bus-Abschluss-Station 20 als letzte Station in dieser Kette sich zwangsläufig nicht mehr melden könnte, würden dessen Statusmeldungen im Bus-Master 12 nicht mehr vorliegen. Die Reaktionszeit des Gesamtsystems auf Erstfehler dieser Art muss mindestens der Fehlererkennungszeit traditioneller Sicherheilssysteme entsprechen. Legt man für diese Sicherheitsbetrachtungen Relaisbausteine zu Grunde, erkennt als äquivalenten Fehler die Durchtrennung der Versorgungsspannung an, so würde dieser Baustein im Idealfall in ca. 20 ms abfallen.

### 2. Annahme, dass ein Fehler des Kanals A der Station 16 vorliegt

Der Defekt eines Kanals innerhalb einer Station, der ein Senden von Statusmeldungen unterdrückt. Da alle Stationen redundant aufgebaut sind, würde ein Versagen eines Kanals innerhalb dieser Station nicht zum Verlust der Gesamtfunktion der Station führen. Um ein sicherheitstechnisches Versagen der Station zu erreichen, müsste mindestens ein weiterer Fehler innerhalb derselben Station angenommen werden. Somit beschränkt sich die Aufdeckungszeit des ersten Fehlers auf die Zeit, welche angenommen werden muss, in der der zweite Fehler mit entsprechenden Wahrscheinlichkeitsbetrachtungen noch nicht eintreten wird. Die Zweitfehlereintrittszeit wurde mit < 1 h festgesetzt.

### 3. Annahme, dass die Bus-Abschluss-Station einen Defekt aufweist

Bei Defekt der Bus-Abschluss-Station 20 gelten die gleichen Überlegungen wie mit Bezug zu Fehlerbeschreibung 1, nämlich Durchtrennen der Busleitung.

Um ein schnelles Abschalten von Ausgängen in einem Bus-System mit sicherheitsgerichteten Funktionen zu erreichen, ist vorrichtungsmäßig vorgesehen, dass die programmierbare Steuereinheit 62, 64 über ein Koppelelement mit dem Bus gekoppelt ist, wobei der programmierbaren Steuereinheit 62, 64 ein Speicherelement zugeordnet ist, in dem Informationen bzw. Nachrichteninhalte zum Aktivieren von Ausgängen und/oder Eingängen abgelegt sind, und wobei in Abhängigkeit eines Vergleichs der in dem Speicherelement abgelegten Informationen mit auf den Bus übertragenen Signalen bzw. Informationen zumindest ein Eingang und/oder Ausgang aktivierbar ist.

Verfahrensmäßig ist vorgesehen, dass eine Bus-Station in Abhängigkeit von einem an dem Eingang und/oder Ausgang anliegenden Signal eine Nachricht auf die Busleitung sendet, wobei die Nachricht von zumindest einer weiteren Bus-Station gelesen und mit für die jeweilige Bus-Station zugeordneten Nachrichteninhalten verglichen wird, wobei bei Übereinstimmung zwischen der Nachricht und dem zugeordneten Nachrichteninhalt eine Aktion wie z. B. Abschalten einer Freigabe durch die Bus-Station ausgeführt wird.

Um dies zu ermöglichen, wird den jeweiligen Ausgängen vor Inbetriebnahme des Systems über den Bus mitgeteilt, auf welche Nachrichteninhalte welche Freigabe geschaltet werden soll. Somit befinden sich in den Speichern der jeweiligen Ausgangsstation Tabellen, welche die Nachrichteninhalte, die zum Abschalten der jeweiligen Freigaben führen sollen, beinhalten. Die Funktion der übergeordneten Steuerung bleibt bestehen. Es wird lediglich ein zusätzlicher Abschaltweg in das System integriert.

Die in den einzelnen Stationen in Speicherelementen abgelegten Abschalt- und/oder Einschalttabellen werden in einem Programmiergerät selbständig generiert. Dabei werden jedem sicherheitsrelevanten Ausgang die Eingänge zugeordnet, auf welche dieser beim Ausschalten reagieren soll. Ist ein Ausgang zum Beispiel von einem Not-Aus-Schalter und einem Kontakt einer Schutztür abhängig, so wird diesem Ausgang eine UND-Funktion zugeordnet, welche direkt von den jeweiligen Eingängen abhängt.

In Fig. 11 ist der logische Aufbau einer Abschalttabelle dargestellt. In dem dargestellten Ausführungsbeispiel ist ein Ausgang A1 von einem Signal M1 eines Not-Aus-Moduls 252 sowie einem Ausgangssignal M2 eines Tür-Moduls 254 abhängig. Die Signale M1, M2 werden einem UND-Glied 256 zugeführt, um ein Freigabesignal für den Ausgang A1 zu generieren.

Das Not-Aus-Modul 252 weist Eingänge 258, 260, 270, 272 für Eingangssignale E1, E2 "Rückführkreis", und "Start" auf. Das Tür-Modul 254 weist Eingänge 274, 276, 278, 280, 282, 284 für Eingangssignale E3, E4, "Verriegeln", "Entriegeln", "Rückführkreis" und "Start" auf. Die beschriebene Abschalttabelle veranlasst ein direktes Abschalten des Ausgangs A1, wenn die Eingangsinformation E1 oder E2 oder E3 oder E4 nicht erfüllt ist.

Sendet eine Eingangsstation, dass ein Eingang geöffnet wurde, wird diese Information von allen Ausgangsstationen gelesen und mit der stationseigenen Abschalttabelle verglichen. Die Abschalttabelle hat nur Einfluss auf das Abschalten einer Freigabe. Das Setzen einer Freigabe kann nur von der Steuereinheit bzw. dem Bus-Master veranlasst werden.

Nachdem ein Anwender die Einzelmodule bestätigt hat, generiert das Programmiergerät wie PC selbständig eine Abschalttabelle und fügt diese dem Übertragungsprotokoll an.

Die Abschalttabelle wird zunächst im Speicher der Steuerung abgelegt. Anschließend werden den jeweiligen Stationen die jeweiligen Abschalttabellen über den Bus übermittelt. Die Stationen senden nach Erhalt der jeweiligen Abschalttabelle ein Echo der erhaltenen Daten, welches von der Steuerung bzw. dem Bus-Master überprüft wird.

Haben beide Kanäle einer Station die Abschalttabelle erhalten, führen diese einen internen Vergleich durch. Die Abschalttabellen in beiden Kanälen müssen gleich sein, da ansonsten keine Systemfreigabe erfolgt.

Wird in dem Programmiergerät eine fehlerhafte Abschalttabelle generiert, so dass einem Ausgang die falsche Eingangsinformation zugeordnet wird, wird dieser Fehler wie folgt aufgedeckt:

Eine Ausgangsstation, welche einen Ausgang aufgrund einer Anforderung zurücksetzen soll, wird mit vier unabhängigen Informationen zu folgenden Handlungen veranlasst:
1. Abschalttabelle Kanal A
2. Abschalttabelle Kanal B
3. Abschaltung durch Master-Kanal A
4. Abschaltung durch Master-Kanal B.

Diese Informationen stehen in einer zeitlichen Abhängigkeit zueinander. Die Abschaltung durch die Abschalttabellen muss immer schneller sein, als die Abschaltung durch die Steuerung bzw. den Bus-Master. Die Abschaltsequenzen müssen eingehalten werden, damit ein Reset nach einer Abschaltung möglich ist. Die Kanäle in der jeweiligen Ausgangsstation überwachen sich gegenseitig auf die Korrektheit der Abschaltsequenzen.

Die anwenderspezifischen Daten werden in dem Flash-Eprom gespeichert. Die Programmierung des Flash-Eproms erfolgt über die serielle Schnittstelle 88. Mit Hilfe eines Schalters und/oder verschiedener Sicherungsmechanismen können die Anwenderdaten übernommen werden.

Die Prüfung des Flash-Eproms erfolgt mit Hilfe des oben beschriebenen CRC-Check. Die Prüfsumme für den CRC-Check wurde vom Anwender-PC erzeugt und mit der von der Master-Station unabhängig erzeugten Prüfsumme verglichen. Nur wenn beide übereinstimmen, wird diese mit dem Flash-Eprom abgespeichert.

Auch ist ein Selbsttest vorgesehen, wobei ein Registertest, ein Flag-Test, ein ALU-Test sowie ein Befehlssatztest vorgesehen ist. Für die Tests ist ein Testprogramm vorgesehen.

Der Watchdog überwacht die Selbsttestfunktionen und wird mit mehr als einem Triggerpunkt angesprochen. Er ist so ausgelegt, dass neben einem zu späten Antriggern auch ein zu frühes Antriggern bemerkt wird.

Wird das Steuerungssystem in Betrieb genommen, beginnt es selbständig mit einer Initialisierungsphase. Die Bus-Master-Station 12 fordert alle angeschlossenen Stationen 14 bis 20 auf, ihren Status zu senden. Sind alle internen Testverfahren wie REM, ROM, I/O, CPU abgeschlossen, werden die Ausgangsebenen freigegeben. Durch die Verwendung von flüchtigen Arbeitsspeichern und der Verwendung von Spannungsüberwachungs IC's befindet sich das Gesamtsystem nach jedem Anlauf in seinem Ausgangszustand.

## Patentansprüche

1. Verfahren zur Programmierung eines sicherheitsgerichteten Steuerungssystems (10) mit zentralen und/oder dezentralen Stationen (12-20), wobei steuerungstechnische Regeln in Form von Software-Makros in einer zentralen oder dezentralen Station (12-20) des Steuerungssystems (10) abgelegt sind und wobei über ein Programmiergerät Befehle an die zentrale oder dezentrale Station (12-20) übertragen werden, über die in den Software-Makros zusammengestellte Befehlsfolgen abgerufen werden,
**dadurch gekennzeichnet,**
**dass** die Software-Makros sicherheitsgerichtete steuerungstechnische Regeln zur Verknüpfung von an Ein- und Ausgängen der zentralen oder dezentralen Station anliegender Ein- und Ausgangsinformationen enthalten, dass die Programmierung in Form einer Zuweisung von Ein- und Ausgangsinformationen über Parameter erfolgt, die von dem Programmiergerät an die Software-Makros aufweisende Station übertragen werden.

2. Verfahren nach Anspruch 1,
**dadurch gekennzeichnet,**
**dass** eine Verifizierung des sicherheitsgerichtelen Steuerungsprogramms durch ein Rücklesen der programmierten Ein-/Ausgangsparameter und ihre Rückbestätigung am Programmiergerät erfolgt.

3. Verfahren nach Anspruch 1 oder 2,
**dadurch gekennzeichnet,**
**dass** zur Erzeugung der Parameter Parametrier-Masken zur steuerungstechnischen Verknüpfung von Ein- und/oder Ausgangssignalen vorgesehen sind.

4. Verfahren nach einem oder mehreren der vorhergehenden Ansprüche,
**dadurch gekennzeichnet,**
**dass** die Software-Makros in einer Bus-Master-Station (12), vorzugsweise Bus-Anfangs-Station hinterlegt werden.

5. Verfahren nach einem oder mehreren der vorhergehenden Ansprüche,
**dadurch gekennzeichnet,**
**dass** die abgelegten Software-Makros bzw. Makro-Befehle als kleine Programmteile ausgeführt sind.

6. Verfahren nach einem oder mehreren der vorhergehenden Ansprüche,
**dadurch gekennzeichnet,**
**dass** die Datenübertragung zwischen dem Programmiergerät und der die Software-Makros aufweisenden Station über eine serielle Schnittstelle wie RS-232-Schnittstelle erfolgt.

## Claims

1. A method for programming of a safety-oriented control system (10) with central and/or decentralized stations (12-20), where control technology rules are stored in the form of software macros in a central or decentralized station (12-20) of the control system (10) and where commands are transmitted via a programming unit to the central or decentralized stations (12-20), via which command sequences compiled in the software macros are called up,
**wherein**
the software macros contain safety-oriented control technology rules for linkage of input and output information present at inputs and outputs of the central or decentralized station, and wherein the programming takes place in the form of an allocation of input and output information with parameters transmitted by the programming unit to the station having the software macros.

2. Method according to Claim 1,
**wherein**
the safety-oriented control program is verified by readback of the programmed input/output parameters and return-acknowledgement thereof at the programming unit.

3. Method according to Claim 1 or 2,
**wherein**
for generation of the parameters parameterization masks are provided for the control technology linkage of input and /or output signals.

4. Method according to one or more of the preceding claims,
**wherein**
the software macros are filed in a bus master station (12), preferably a bus starting station.

5. Method according to one or more of the preceding claims,
wherein
the filed software macros or macro commands are designed as small program components.

6. Method according to one or more of the preceding claims,
**wherein**
the data is transferred between the programming unit and the station containing the software macros xvia a serial interface such as an RS-232 interface.

## Revendications

1. Procédé pour programmer un système de commande axé sur la sécurité (10) avec des stations (12-20) centralisées et/ou décentralisées, des régulateurs techniques de commande étant stockés en mémoire sous forme de macro-instructions logicielles dans une station centralisée ou décentralisée (12-20) du système de commande (10) et des instructions étant transmises par l'intermédiaire d'un programmateur à la station centralisée ou décentralisée (12-20), par l'intermédiaire de laquelle peuvent être appelées les séquences d'instructions groupées dans les macro-instructions logicielles,
**caractérisé en ce**
**que** les macro-instructions logicielles contiennent des régulateurs techniques de commande axés sur la sécurité servant à enchaîner des informations d'entrée et de sortie portées par des entrées et des sorties de la station centralisée ou décentralisée, et que la programmation s'effectue sous forme d'une assignation d'informations d'entrée et de sortie par l'intermédiaire de paramètres qui sont transmis par le programmateur à la station comportant des macro-instructions logicielles.

2. Procédé selon la revendication 1,
**caractérisé en ce**
**qu'**une vérification du programme de commande axé sur la sécurité s'effectue par une relecture des paramètres d'entrée et de sortie programmés et par leur confirmation en retour au programmateur.

3. Procédé selon la revendication 1 ou 2,
**caractérisé en ce**
**que** pour créer les paramètres sont prévus des masques de paramétrage servant à enchaîner par technique de commande des signaux d'entrée et/ou de sortie.

4. Procédé selon l'une ou plusieurs revendications précédentes,
**caractérisé en ce**
**que** les macro-instructions logicielles sont mises en mémoire dans une station Bus Master (12), de préférence une station bus de tête.

5. Procédé selon l'une ou plusieurs revendications précédentes,
**caractérisé en ce**
**que** les macroinstuctions logicielles ou macrocommandes stockées en mémoire sont constituées de petites parties de programmes.

6. Procédé selon l'une ou plusieurs revendications précédentes,
**caractérisé en ce**
**que** la transmission des données entre le programmateur et la station comportant les macro-instructions logicielles s'effectue par l'intermédiaire d'une interface sérielle telle que RS 232.
